# EUROPEAN PATENT APPLICATION

(11) **EP 4 355 025 A1**
(43) Date of publication of application: **17.04.2024**
(21) Application number: 22200954.0
(22) Date of filing: 11.10.2022
(51) Int. Cl.: H05B 1/02, F24D 11/02

(54) **HEAT PUMP SYSTEM WITH SUPPLEMENTAL HEATING SYSTEM AND METHOD FOR CONTROLLING THEREOF**

(71) Applicant: BDR Thermea Group B.V., 7332 BD Apeldoorn (NL)
(72) Inventor: MERAND, Denis, 7332 BD Apeldoorn (NL); ANTOINE, Florian, 7332 BD Apeldoorn (NL); KOENIG, Pierre, 7332 BD Apeldoorn (NL)
(74) Representative: Dennemeyer & Associates S.A.

(57) **Abstract**

The invention relates to a heat pump system (1), wherein a supplemental heating system (3) comprises one or more fixed resistive electrical elements (12), each fixed resistive electrical element (12) having a fixed power and each fixed resistive electrical element (12) being connected to a switch (11), and a convertor (13) associated with a variable resistive electrical element (14).

The heat pump system is configured to determine a supplemental power (Pₛᵤₚ) to be supplied to the supplemental heating system (3), distribute at least part of the supplemental power (Pₛᵤₚ) over the one or more fixed resistive electrical elements by controlling the one or more switches and control the converter (13) to provide a modulated residual power to the variable resistive electrical element (14).

## Description

### TECHNICAL FIELD

The invention relates to a heat pump system for heating water, comprising a heat pump and a supplemental heating system. The invention further relates to a supplemental heating system for providing supplemental heat to a heat pump. Additionally, the invention relates to a method for controlling a supplemental heating system of a heat pump system, a controller, and a computer program product.

### BACKGROUND

To produce warm water in buildings, whether for heating or domestic warm water, it is common to use resistive electrical elements. Such resistive electrical elements (or electric resistances) generate heat when an electrical current passes through the resistive electrical element due to the resistive nature of the element (Joule heating). This heat can be used to heat up water.

When heating water, these resistive electrical elements can be the main source of energy or be in supplement of a main source. The latter may be the case, for example, in situations where a heat pump is used as the main source for heating water and where it is common to use one or more resistive electrical elements in supplement to the heat pump to ensure the production of sufficient warm water in the event the heat pump cannot meet the customer's needs alone. This may for instance be the case in situations of peak consumption, climatic conditions outside the field of use, product failure.

Heat pumps comprise a heat exchanging circuit to extract heat calories from a heat source or source fluid, e.g. external water or air, for heating water in a building (or storage tank). There may be provided a resistive electrical element for supplemental heating of said water in case the heat pump is unable to supply enough heat calories to said water or in case there is more (renewable) power available than can be consumed by the heat pump.

These resistive electrical elements are generally used by means of a very simple on/off control. This has a good efficiency and uses a very simple regulation which regulation does not generate significant losses.

However, these types of resistive electrical elements are not adaptable to variations in the power supplied to them. The resistive electrical elements are suited for a fixed, non-variable, electrical power source such as from classical continuous power grid sources and may be referred to in this document as fixed resistive electrical elements.

Therefore, fixed resistive electrical elements are not suitable in situations where the supply of energy is fully or partially provided by renewable energy. Renewable energy sources such as solar or wind energy provide non-continuous and varying electrical power outputs. Fixed resistive electrical elements are therefore not well suited to be used when a heat pump is powered by a renewable energy source, or by a combination of a traditional (stable) grid source and a renewable source.

Also, fixed resistive electrical elements are not suitable to be used as a supplemental heating system as this also requires the supplemental heating system to work with different power conditions.

In prior art, this problem was addressed by providing an array of fixed resistive electrical elements in a so-called stepped architecture, where different fixed resistive electrical elements are suited for consuming a certain power. Depending on the available power output, the fixed resistive electrical elements are selectively switched on and off. For instance, by providing three fixed resistive electrical elements of 3000W, power can be exploited between 3000 and 9000W with steps of 3000W.

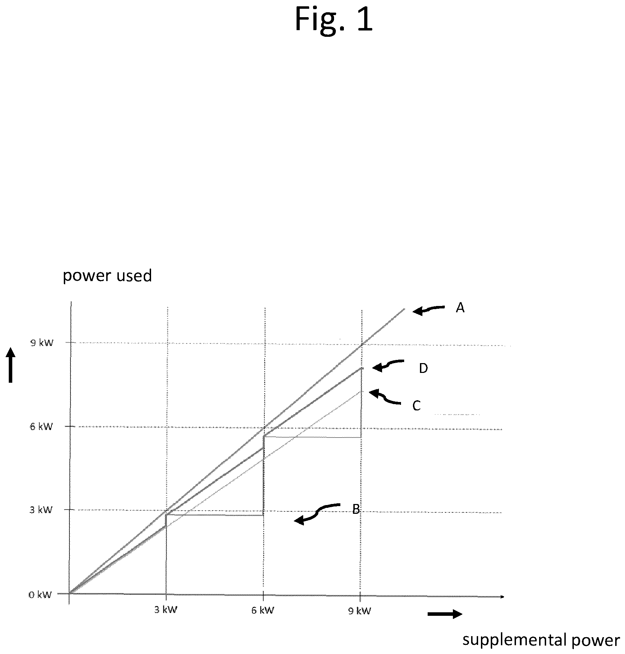

Fig. 1 shows a graph depicting the supplemental power (horizontal axis), i.e. the power available for the resistive electrical elements and the actual power used (vertical axis) by these elements. In an ideal situation, all power is used, depicted by line A. In the example provided above, power is used in a staged manner, depicted by line B.

As can be seen in Fig. 1, line B, such an array of resistive electrical elements works with threshold levels where power that is situated between two different threshold levels is not used. Only power is used up to the nearest lower threshold value.

The object of the invention is therefore to provide a solution that makes better use of power between two thresholds and thus more efficiently uses the power available.

### SUMMARY OF THE INVENTION

The object is solved by a heat pump system, comprising a heat pump and a supplemental heating system with one or more fixed resistive electrical elements, each fixed resistive electrical element having a fixed power and each fixed resistive electrical element being connected to a switch,
the supplemental heating system further comprising a convertor associated with a variable resistive electrical element,
wherein the heat pump system is configured to determine a supplemental power to be supplied to the supplemental heating system, distribute at least part of the supplemental power over the one or more fixed resistive electrical elements by controlling the one or more switches and control the converter to provide a modulated residual power to the variable resistive electrical element.

Supplemental power may be available in situations where renewable energy sources provide more power than can be consumed by the heat pump. Also, supplemental power may be guided to the supplemental heating system in situations where the heat pump is unable to produce enough warm water, for instance due to ambient conditions not optimal for the heat pump.

The supplemental power is added to the water to be heated by the heat pump. The heat pump system may comprise a water flow system configured to receive water to be heated and discharge heated water. Both the heat pump and the supplemental heating system are configured to provide heat to water in the water flow system, e.g. to water in a storage tank being part of the water flow system.

The heat pump may be any kind of heat pump, including an air/water heat pump, a water/water heat pump and heat pump water heater.

The fixed and variable resistive electrical elements are capable of heating watervia the mechanism of Joule heating. In use, the fixed and variable resistive electrical elements are in thermal contact with the water to be heated.

Throughout the application reference is made to water to be heated by the resistive electrical elements, but it is noted that other fluids may be heated by the fixed and variable resistive electrical elements, generally referred to as a destination fluid. The destination fluid may be for instance be water, an aqueous solution (e.g. mixture of water and glycol) or air. Where reference is made to a water storage tank, this may also be understood as a destination fluid storage tank.

The heat pump system is configured to control the one or more switches such that the residual power is as small as possible, given the fixed power specifications of the respective fixed resistive electrical elements. In other words, the heat pump system is configured to open or close the respective fixed resistive electrical elements to consume as much of the supplemental power as possible by controlling the one or more switches.

The fixed resistive electrical elements have a high efficiency but are only compatible with a very small input power range.

In Fig. 1, line D represents the provided solution. In the provided example, in which three fixed resistive electrical elements are provided of 3kW, if there is less than 3kW supplemental power, this power is used by the variable resistive electrical element with a small loss. Once the supplemental power reaches 3kW, all power is efficiently used by one fixed resistive electrical element. In between 3kW and 6kW supplemental power, 3kW remains to be efficiently used by one fixed resistive electrical element while the remainder of the supplemental energy, i.e. the residual power, is used by the variable resistive electrical element.

It is noted that it would be possible to use variable resistive electrical elements for the entire range of input power. However, as variable resistive electrical elements are less efficient, this would strongly reduce the efficiency of the system. The control of such an arrangement requires electronic components consuming a relatively high amount of energy, which can thus not be used to heat the fluid to be heated. In Fig. 1 line C depicts the situation in which a variable resistive electrical element would be used for the entire range, showing this is a less efficient solution than line D.

The now presented heat pump system implements a staged power control for heating water using the available electrical power. The regulation is composed of fixed resistances and a variable resistance. The regulation is dependent on the available electrical power.

Therefore, the now presented heat pump system is advantageous as in most situations a large part of the supplemental power is consumed by the fixed resistive electrical elements, while only a residual power is consumed by variable resistive electrical elements, to bridge the gap between the thresholds of the respective resistive electrical elements. The heat pump system is configured to transfer as much supplemental power to the fixed resistive electrical elements as possible to increase the efficiency.

The input power of the variable resistive electrical element is modulated by the convertor, preferably being an AC/AC convertor. The convertor converts a voltage to a lower voltage. This may be referred to as power modulation. The convertor may also be referred to as a power modulator or power convertor.

The convertor is associated with the variable resistive electrical element which means that the convertor is connected to the variable resistive electrical element such that it can provide modulated power to the variable resistive electrical element.

The provided heat pump system applies a logic control that manages and uses the supplemental power in an optimal manner. Within the logic of control, power is directed to the one or more fixed resistive electrical elements based on threshold values defined by the fixed power of the respective fixed resistive electrical elements. In most situations, this means that a substantial portion of the available power is consumed in the most efficient manner, i.e. by means of fixed resistive electrical elements. Only the remainder of the supplemental power, i.e. the power that is not directed to the fixed resistive electrical elements is directed to the slightly less efficient variable resistive electrical element, instead of being wasted.

The residual power is thus equal to the supplemental power minus the power provided to the fixed resistive electrical elements. Occasionally, the supplemental power may be zero. Also, the residual power may occasionally be zero.

The switches may be simple open/close switches. The switches are connected to the resistive electrical elements to allow power to flow to the respective resistive electrical elements.

According to an embodiment the switches are voltage trigger switches, for instance TRIACS.

A voltage trigger switch or a voltage release switch, is a switch which opens when a certain threshold voltage is available. This allows to distribute the supplemental power over the fixed resistive electrical elements.

A TRIAC is a triode for alternating current, also known as bidirectional triode thyristor or bilateral triode thyristor. A TRIAC is a three terminal electronic component that can conduct current in both directions between two terminals, when a trigger signal, e.g. from a (micro)controller is applied to the ZVD (zero voltage detector) optocoupler at the third terminal,, i.e. the gate. The TRIAC is controlled to allow current through the associated fixed resistive electrical element. This solution has a high efficiency and is EMC (electromagnetic) compliant.

According to an embodiment, the convertor is a voltage regulator, comprising a capacitor and an inductive load.

The inductive load may be a coil.

The convertor may also be referred to as a power modulator or power convertor.

Preferably, the convertor comprises an inductive load and a capacitor.

Furthermore, the convertor comprises a convertor switch to connect or disconnect this circuitry to a power source, in this case the supply of residual power.

By opening and closing the convertor switch in a controlled manner the output voltage supplied to the variable resistive electrical element can be regulated. When the convertor switch is closed, a portion of the supplemental power flows directly to the variable resistive electrical element while an other portion of the supplemental power will temporarily be stored by the arrangement of the inductive load. When the circuitry is disconnected, the configuration of the system is still able to provide power to the variable resistive electrical element by consuming the energy stored, until the next closing of the convertor switch. By changing the frequency and duration of opening and closing the convertor switch, the output voltage changes and can thus be regulated.

More preferably, the convertor is provided by a buck AC/AC convertor architecture, comprising a (filter) capacitor, positioned parallel to the variable resistive electrical element and an inductive load (coil), positioned in series with both the variable resistive electrical element and the (filter) capacitor. Further, the buck AC/AC convertor may comprise a diode, positioned in parallel to the branch including the inductive load, the capacitor and the variable resistive electrical element. Furthermore, the buck AC/AC convertor comprises a convertor switch to connect or disconnect this circuitry to a power source, in this case the supply of residual power.

According to an embodiment, the power source provides an alternating current.

According to an embodiment the heat pump system is powered by a variable power source, being a renewable power source, a grid power source or a combination of a renewable power source and a grid power source.

Renewable power sources may for instance be a solar power source, a wind power source or a combination of wind and solar. Grid power is usually considered a stable, non-variable power source, but may also vary in certain situations (malfunction of the grid, lack of power).

According to an embodiment the system comprises a controller.

The controller may be a piece of hardware designed to provide the system with the described functionality or may be a computer unit running a software program to provide the system with the described functionality. The controller is configured to obtain the supplemental power to be provided to the supplemental heating system, generate control signals to open or close the fixed resistive electrical elements, determine the residual power and generate control signals to control the converter.

According to an embodiment the heat pump system is configured to determine the supplemental power by determining the difference between a total power available to the heat pump system and heat pump power.

The total power available to the heat pump is the total power that is available from the available energy sources which can be used by the heat pump system, including the heat pump and the supplemental heating system. The total power available to the heat pump system may vary as part of the total power may be provided by renewable energy sources. The heat pump power is the power consumed by the heat pump.

This ensures that all the available power is used by the heat pump system in an efficient manner.

According to an embodiment the heat pump system is configured to update the supplemental power and adjust the settings of the supplemental heating system at regular intervals.

In order to adjust for fluctuations in the total power available, for instance due to fluctuations in sun light or wind force, the regular time intervals can be preferably be less than for instance 5 minutes, 1 minute, 15 seconds or 1 second. The time intervals may be so short that the term real-time may be applied, i.e. time intervals less than 0,1 second.

Adjusting the settings may comprise opening and/or closing switches and adjusting the operating settings of the convertor to provide an adjusted modulated residual power to the variable resistive electrical element.

According to an embodiment, the heat pump comprises a destination fluid storage tank or water storage tank, wherein the one or more fixed resistive electrical elements and the variable resistive electrical element are positioned in the destination fluid storage tank or water storage tank.

The supplemental power is thus added to the water or destination fluid to be heated by the heat pump. According to this embodiment, the resistive electrical elements are positioned in the destination fluid or water storage tank that is part of the heat pump, in particular part of a destination fluid or water flow system of the heat pump system configured to receive destination fluid or water to be heated and discharge heated destination fluid or water.

According to an embodiment, the heat pump comprises a heat exchanging circuit or loop configured to circulate a heat transfer fluid through a compressor, a condenser, an expansion valve and an evaporator subsequently and repeatedly to transfer heat from the heatsource or source fluid to the destination fluid.

The heat source or source fluid may be (outside) air or water-base solution. The water to be heated may be domestic water or water used for heating, such as heating a building. The heat pump may comprise a water storage tank, the heat pump being configured to heat the water in the water storage tank.

The heat pump may be powered by a variable renewable power source.

According to a further aspect there is provided a supplemental heating system for providing supplemental heat to a heat pump, wherein the supplemental heating system comprises one or more fixed resistive electrical elements, each fixed resistive electrical element having a fixed power and each fixed resistive electrical element being connected to a switch,
the supplemental heating system further comprising a convertor associated with a variable resistive electrical element,
wherein the one or more switches are configured to be controlled to distribute at least part of a supplemental power over the respective fixed resistive electrical elements and the converter is configured to be controlled to provide a modulated residual power to the variable resistive electrical element.

Preferably, the supplemental heat system is configured to open or close the respective fixed resistive electrical elements to consume as much of the supplemental power as possible by controlling the one or more switches.

According to a further aspect there is provided a method for controlling a supplemental heating system of a heat pump system, the supplemental heating system comprising one or more fixed resistive electrical elements, each fixed resistive electrical element having a fixed power and each fixed resistive electrical element being connected to a switch, and a convertor associated with a variable resistive electrical element, wherein the method comprises:
- determining a supplemental power to be supplied to the supplemental heating system,
- distributing the supplemental power over the fixed resistive electrical elements and the variable resistive electrical element by
   ○ distribute at least part of the supplemental power over the respective fixed resistive electrical elements by controlling the one or more switches and
   ○ providing a modulated residual power to the variable resistive electrical element by controlling operating settings of the convertor.

Of course, at certain moments in time the supplemental power may be zero and/or the residual power may be zero. It will be understood that if the supplemental power is below the smallest fixed power available, power is only provided to the variable resistive electrical element.

Preferably, the method comprises opening or closing the respective fixed resistive electrical elements to consume as much of the supplemental power by controlling the one or more switches as possible.

The heat pump system, comprising a heat pump and a supplemental heating system, may be configured to heat water. The method provided ensures that in case the heat pump is not able to heat the water sufficiently, supplemental power is provided to the supplemental heating system to further heat the water.

According to an embodiment the method further comprises
- controlling a heat pump to consume heat pump power, and
- determining the supplemental power by determining the difference between the total power available to the heat pump system and the heat pump power.

According to an embodiment the method comprises heating a destination fluid or water by means of the fixed and variable resistive electrical elements in a destination fluid storage tank or water storage tank directly.

The method may be performed continuously. The steps of the method may be performed at regular time intervals, to be able to adjust the power distribution to changing conditions. Determining and distributing the supplemental power may be done at regular intervals. The regular time intervals can be less than for instance 5 minutes, 1 minute, 15 seconds or 1 second. The time intervals may be so short that the term real-time may be applied, i.e. time intervals less than 0,1 second.

According to an embodiment, the amount of supplemental power distributed over the respective fixed resistive electrical elements is maximized, taking into account the fixed powers of the fixed resistive electrical elements. To maximize the amount of supplemental power the available electrical power to the respective fixed resistive electrical elements is supplied by controlling the one or more switches. Additionally or alternatively, the energy still available can be provided to the variable resistive electrical element by controlling operating settings of the convertor.

According to a further aspect there is provided a controller which is configured to perform the above method.

According to a further aspect there is provided a computer program product comprising instructions which, when the program is executed by a computer or above controller, cause the computer or the controller to carry out the above method.

Furthermore, a data carrier is provided on which the computer program is stored and/or data carrier signal is provided which transmits the computer program.

According to a further aspect there is provided the use of a heat pump system or supplemental heating system.

### BRIEF DESCRIPTION OF THE DRAWINGS

In the figures, the subject-matter of the invention is schematically shown, wherein identical or similarly acting elements are usually provided with the same reference signs:
- Figure 1: schematically shows a graph depicting the power usage,
- Figure 2: schematically shows a heat pump system according to an embodiment,
- Figure 3: schematically shows a convertor according to an embodiment,
- Figure 4: schematically shows a convertor according to an other embodiment.

### DESCRIPTION

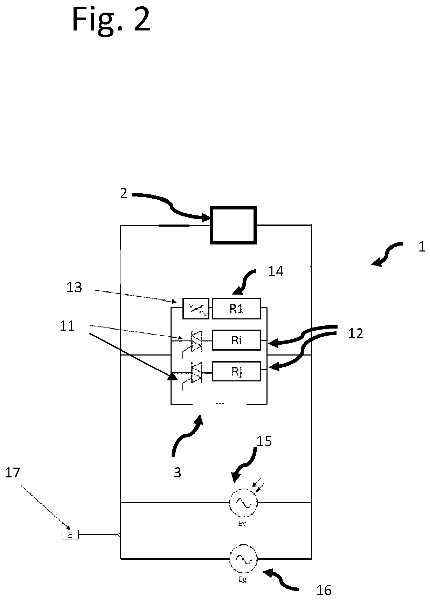

Fig. 2 schematically depicts a heat pump system 1 configured to heat water according to an embodiment. A water storage tank or water pipes are omitted from the figures for reasons of clarity.

The heat pump system 1 comprises a heat pump 2 and a supplemental heating system 3.

The heat pump 2 is only depicted schematically and may comprise a loop for circulating a heat transfer fluid through a compressor, a condenser, an expansion valve and an evaporator subsequently and repeatedly. The heat transfer fluid is compressed and thereby heated by the compressor. From the compressor, the compressed and heated heat transfer fluid flows to the condenser to transfer heat to the water to be heated. The cooled down heat transfer fluid flows to the expansion valve, where the pressure is reduced, thereby further cooling the heat exchange fluid. The decompressed and cooled down heat exchange fluid then flows to the evaporator to be heated by the heat source or source fluid (air or water-base solution) before it is returned to the compressor. The compressor is the main element of the heat pump using power. The electrical parts of the heat pump 2 are electrically connected, which is schematically depicted in Fig. 2.

The supplement heating system 3 may comprise one or more switches 11 each being connected to a fixed resistive electrical element 12. Fig. 2 shows two sets of switches 11 and fixed resistive electrical elements 12, but it will be understood that other numbers of sets could be used as well.

The supplemental heating system 3 further comprises a convertor 13 connected to a variable resistive electrical element 14.

Further shown are energy sources, including a renewable power source 15 providing energy Eᵥ from renewable sources (e.g. solar panels) and a grid power source 16 providing energy E_{g} from the grid.

The above elements are electrically connected as shown in Fig. 2.

Further provided is a controller 17, which may also be referred to as an energy unit. The controller 17 may be a dedicated controller to perform the functionality explained here in relation to the supplemental heating system 3. The controller may be part of the larger heat pump system 1 controller controlling the entire heat pump system 1. The controller 17 may be a software module running on the heat pump system controller.

The controller 17 is configured to determine the supplemental power to be supplied to the supplemental heating system 3. The controller 17 is shown to be connected to the heat pump system 1 with a single connection, but may in fact have several connections to measure at different locations in the heat pump system 1 and/or may have a receiver to receive relevant parameters. The controller 17 is configured to determine the heat pump power, i.e. is the power consumed by the heat pump 2. The controller 17 is further configured to determine the total power available to the heat pump system 1 by measuring or otherwise obtaining the power provided by the renewable power source 15 or/and the grid power source 16.

Based on these values, the controller 17 is configured to determine a supplemental power to be provided to the supplemental heating system 3.

The heat pump system 1, is configured to control switches 11 and the convertor 13 to distribute the supplemental power over the resistive electrical elements 12, 14 in an efficient manner. This control is managed by the switches 11 and convertor 13.

The heat pump system 1 is configured to control switches 11 to open or close to direct as much of the supplemental power to the fixed resistive electrical elements 12 that can be consumed. Switches 11 may be voltage trigger switches, for instance TRIACS.

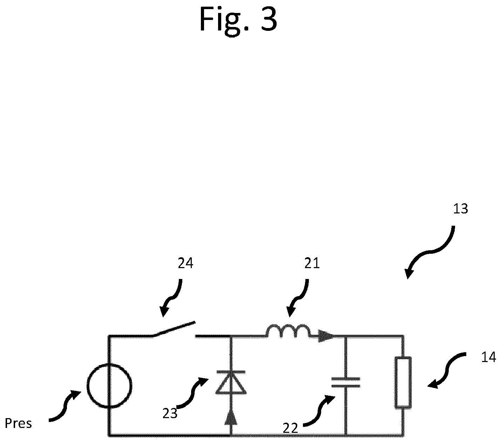

Fig. 3 schematically depicts a convertor having a buck AC/AC convertor architecture. The convertor 13 comprises an inductive load 21 and a capacitor 22, which may be a filter capacitor, the capacitor 22 positioned parallel to the variable resistive electrical element 14 and the inductive load 21 being in series with the variable resistive electrical element 14 and the capacitor 22. A filter capacitor is a capacitor which filters out a certain frequency, or a certain range of frequencies, from a circuit. Typically, a filter capacitor filters out signals of a low frequency, close to 0Hz, such as DC signals, to block DC signals and pass AC signals through the circuit. In general, they are used to filter noise within a given circuit. Further shown is a convertor switch 24 to connect or disconnect this circuitry to or from the supply of residual power (Pᵣₑₛ) and a diode 23 positioned parallel to the branch with inductive load 21, capacitor 22 and fixed resistive electrical element 21.

The controller 17 is configured to open and close the convertor switch 24 in a controlled manner to regulate the output voltage supplied to the variable resistive electrical element 14. When the convertor switch 24 is closed, the current flows through the variable resistive electrical element 14 and stores power in the loop formed by the capacitor 22 and the inductive load 21. When the convertor switch 24 is open, the variable resistive electrical element receives power stored in the loop formed by the capacitor 22 and the inductive load 21.

By changing the frequency and duration of opening and closing of the convertor 24 , the output voltage and thereby the power provided to the variable resistive electrical elements 14 can be controlled.

For example, the convertor switch 24 may have a pulse-width modulation period of 20 microseconds, and a power modulation range from 10% (2 microseconds) to 90% 18 microseconds.

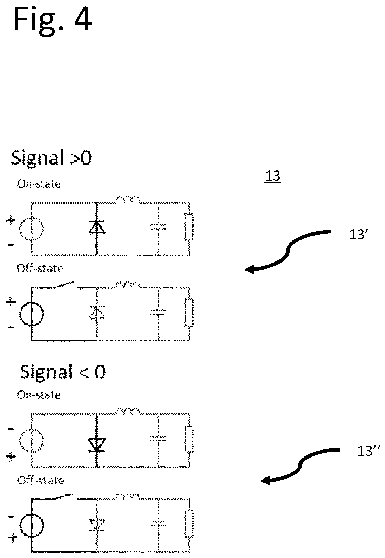

Fig. 4 schematically depicts a convertor 13 having a dual buck AC/AC convertor architecture, which comprises two buck AC/AC convertors 13', 13". Both buck AC/AC convertors 13', 13" having circuits similar as described above with reference to Fig. 3, only the diode 23 being orientated oppositely in the first buck AC/AC convertors 13' compared to the second buck AC/AC convertor 13".

Fig. 4 shows the first buck AC/AC convertor 13', which is able to process power when the voltage is above zero, because of the orientation of the diode 23. Fig. 4 shows the first buck AC/AC convertor 13' twice (above), i.e. in the on and off-state with the convertor switch 24 being closed and opened respectively.

Fig. 4 further shows the second buck AC/AC convertor 13", which is able to process power when the voltage is below zero, because of the orientation of the diode 23. Fig. 4 shows the second buck AC/AC convertor 13" twice, i.e. in the on and off-state with the convertor switch 24 being closed and opened respectively.

The dual-buck AC/AC convertor architecture allows the two opposite alternations to be managed. This ensures that all the available power is used by the heat pump system in an efficient manner.

So, according to the example described above with reference to Fig. 1, i.e. an embodiment having two fixed resistive electrical elements 12 having a capacity of e.g. 3kW and one variable resistive electrical element 14 having a capacity of e.g. 3 kW, and comprising TRIACs as switches 11, the available supplemental power will be used as follows:
If the supplemental power is in the range of [0 - 3] kW, power modulation by means of the convertor 13 is applied to use the energy available in the variable resistive electrical element 14 even when the first TRIAC trip threshold (of 3kW) is not reached.

If the supplemental power is in the range of [3 - 6] kW, the first range of 3kW is consumed by one fixed resistive electrical element 12 by closing one switch 11, while the remainder of the energy (residual power Pᵣₑₛ) is consumed with the use of power modulation by means of the convertor 13 and the variable resistive electrical element 14.

If the supplemental power is in the range of [6 - 9] kW, the first range of 6kW is consumed by two fixed resistive electrical elements 12 by closing two switches 11, while the remainder of the energy (residual power Pᵣₑₛ) is consumed with the use of power modulation by means of the convertor 13 and the variable resistive electrical element 14. For example, if 4,8 kW is available, 3kW is consumed by a fixed resistive electrical element and 1,8 kW is consumed via power modulation by the variable resistive electrical element.

The embodiments described allow to follow at best the power that is available, in particular in situations where there is not a fixed stable power supply and transmit the available energy to the water to be heated. The embodiments provide the advantage of improved efficiency as it reduces the impact of the average efficiency of power convertors and exploit the energy available between two threshold values of the fixed resistive electrical elements.

The invention is not limited to the embodiments shown in the drawings and described hereinbefore, which may be varied in different manners within the scope of the claims and their technical equivalents.

### Reference Signs

- 1.: Heat pump system
- 2.: Heat pump
- 3.: Supplemental heating system
- 11.: Switches
- 12.: Fixed resistive electrical elements
- 13.: Convertor
- 14.: Variable resistive electrical element
- 15.: Renewable power source
- 16.: Grid power source
- 17.: Controller
- 21.: Inductive load
- 22.: Capacitor
- 23.: Diode
- 24.: Convertor switch

## Claims

1. Heat pump system (1), comprising a heat pump (2) and a supplemental heating system (3) with one or more fixed resistive electrical elements (12), each fixed resistive electrical element (12) having a fixed power and each fixed resistive electrical element (12) being connected to a switch (11),
the supplemental heating system (3) further comprising a convertor (13) associated with a variable resistive electrical element (14),
wherein the heat pump system is configured to determine a supplemental power to be supplied to the supplemental heating system (3), distribute at least part of the supplemental power over the respective fixed resistive electrical elements (12) by controlling the one or more switches (11) and by controlling the convertor (13) to provide a modulated residual power to the variable resistive electrical element (14).

2. Heat pump system (1) according to claim 1, wherein the switches (11) are voltage trigger switches, for instance TRIACS.

3. Heat pump system (1) according to any one of the preceding claims, wherein the convertor (13) is a voltage regulator, comprising a capacitor (22) and an inductive load (23).

4. Heat pump system (1) according to any one of the preceding claims, wherein the heat pump system (1) is powered by a variable power source, being a renewable power source, a grid power source or a combination of a renewable power source and a grid power source.

5. Heat pump system (1) according to any one of the preceding claims, wherein the heat pump system (1) comprises a controller (17).

6. Heat pump system (1) according to any one of the preceding claims, wherein the heat pump system (1) is configured to determine the supplemental power by determining the difference between a total power available to the heat pump system (1) and heat pump power.

7. Heat pump system (1) according to any one of the preceding claims, wherein the heat pump system (1) is configured to update the supplemental power and adjust the settings of the supplemental heating system (3) at regular intervals.

8. Heat pump system (1) according to any one of the preceding claims, wherein the heat pump (2) comprises a destination fluid storage tank or water storage tank, wherein the one or more fixed resistive electrical elements (11) and the variable resistive electrical element (13) are positioned in the destination fluid storage tank or water storage tank.

9. Supplemental heating system (3) for providing supplemental heat to a heat pump (2), wherein the supplemental heating system (3) comprises one or more fixed resistive electrical elements (12), each fixed resistive electrical element (12) having a fixed power and each fixed resistive electrical element (12) being connected to a switch (11),
the supplemental heating system (3) further comprising a convertor (13) associated with a variable resistive electrical element (14),
wherein the one or more switches are configured to be controlled to distribute at least part of a supplemental power over the respective fixed resistive electrical elements (12) and the converter (13) is configured to be controlled to provide a modulated residual power to the variable resistive electrical element (14).

10. Method for controlling a supplemental heating system (3) of a heat pump system (1), the supplemental heating system (3) comprising one or more fixed resistive electrical elements (12), each fixed resistive electrical element (12) having a fixed power and each fixed resistive electrical element (12) being connected to a switch (11), and a convertor (13) associated with a variable resistive electrical element (14), wherein the method comprises:
• determining a supplemental power to be supplied to the supplemental heating system (3),
• distributing the supplemental power over the fixed resistive electrical elements (12) and the variable resistive electrical element (14) by
○ distribute at least part of the supplemental power over the respective fixed resistive electrical elements (12) by controlling the one or more switches (11) and
○ providing a modulated residual power to the variable resistive electrical element (14) by controlling operating settings of the convertor (13).

11. Method according to claim 10, wherein the method further comprises
• controlling a heat pump (2) to consume heat pump power, and
• determining the supplemental power by determining the difference between the total power available to the heat pump system (1) and the heat pump power.

12. Method according to any one of the claims 10 - 11, wherein the method comprises heating a destination fluid or water by means of the fixed and variable resistive electrical elements in a destination fluid storage tank or water storage tank directly.

13. Method according to any one of the claims 10 - 12, wherein the amount of supplemental power distributed over the respective fixed resistive electrical elements is maximized, taking into account the fixed powers of the fixed resistive electrical elements.

14. Controller (17) configured to perform the method according to any one of the claims 10 - 13.

15. Computer program product comprising instructions which, when the program is executed by a computer or a controller (17) according to claim 14, cause the computer or the controller (17) to carry out the method according to any one of the claims 10 - 13.
